# EUROPÄISCHE PATENTSCHRIFT

(11) **EP 2 148 172 B1**
(45) Veröffentlichungstag und Bekanntmachung des Hinweises auf die Patenterteilung: **04.09.2013**
(21) Anmeldenummer: 09165785.8
(22) Anmeldetag: 06.04.2002
(51) Int. Cl.: G01C 21/36

(54) **Verfahren zum Betrieb eines Navigationssystems für ein Fahrzeug, insbesondere ein Kraftfahrzeug, und Navigationssystem**
Method for operating a navigation system for a vehicle, in particular a motor vehicle and navigation system
Procédé de fonctionnement d'un système de navigation pour un véhicule, notamment un véhicule automobile, et système de navigation

(30) Priorität: 30.06.2001 DE 10131800
(43) Veröffentlichungstag der Anmeldung: 27.01.2010
(62) Teilanmeldung aus: 02737774.6
(73) Patentinhaber: Robert Bosch GmbH, 70442 Stuttgart (DE); Draeger, Gerd, 38102 Braunschweig (DE)
(72) Erfinder: Friedrichs, Arne, 38114 Braunschweig (DE); Vollmer, Vasco, 31162 Bad Salzdetfurth (DE); Draeger, Gerd, 38102 Braunschweig (DE)

(56) Entgegenhaltungen:
- EP-A- 0 803 705
- US-B1- 6 202 024

## Beschreibung

### Technisches Gebiet

Die Erfindung betrifft ein Verfahren zum Betrieb eines Navigationssystems und ein Navigationssystem für ein Fahrzeug, insbesondere für ein Kraftfahrzeug, bei dem von einem Ortungssystem Daten zur geographischen Position eines Fahrzeuges ermittelt und an eine Einrichtung zur elektronischen Datenverarbeitung mit Zugriff auf eine Datenbank und eine digitale Straßenkarte übertragen werden und anhand dieser Daten der Standort des Fahrzeuges auf der digitalen Straßenkarte bestimmt wird und dem Fahrer des Fahrzeuges akustisch und/oder visuell Zielführungsanweisungen ausgegeben werden.

### Stand der Technik

Navigationssysteme für Fahrzeuge, insbesondere Kraftfahrzeuge, sowie Verfahren zum Betreiben derartiger Navigationssysteme sind bekannt. Diese dienen dazu, die aktuelle geographische Position des Fahrzeuges zu bestimmen und in Abhängigkeit eines vorgebbaren, zu erreichenden Zielpunktes die günstigste Fahrtroute zu berechnen und dem Fahrer Anweisungen zur Fahrtroute zu geben.

Die bekannten Navigationssysteme benötigen Informationen, die für die Bestimmung des aktuellen Standortes des Fahrzeuges und die Berechnung der Fahrtroute notwendig sind. Hierzu gehören insbesondere Straßenverläufe, Abbiegebedingungen und dergleichen. Diese Daten werden in Form einer Datenbasis bereitgestellt. Die Datenbasis umfasst hierzu beispielsweise eine so genannte digitale Straßenkarte, die Wegepunkte und/oder Entscheidungspunkte der möglichen Routen enthält. Bekannt ist, die Datenbasis auf fahrzeugfesten Massenspeichern, beispielsweise einer CD-ROM, vorzuhalten.

Ferner ist ein Ortungssystem notwendig, das die aktuelle geographische Position des Fahrzeuges feststellt. Bekannt ist hierzu beispielsweise das satellitengestützte Global Positioning System (GPS).

Eine Einrichtung zur elektronischen Datenverarbeitung vergleicht die vom Ortungssystem gelieferten Positionsdaten mit den in der digitalen Straßenkarte gespeicherten Daten und bestimmt die aktuelle Position des Fahrzeuges. Entsprechend dem gewählten Zielpunkt kann nunmehr durch die Einrichtung zur elektronischen Datenverarbeitung anhand von Wegepunkten und/oder Entscheidungspunkten auf einer ausgewählten günstigsten Fahrtroute dem Fahrer visuell und/oder akustisch eine Zielführungsinformation gegeben werden.

Zur Erfüllung der aufgeführten Funktionen bestehen die bekannten Navigationssysteme insgesamt aus so genannten Subsystemen, die miteinander in funktioneller Verbindung stehen. Bei den einzelnen Subsystemen handelt es sich im Wesentlichen um solche Systeme wie Einrichtung zur elektronischen Datenverarbeitung, Ortungssystem, digitale Straßenkarte, Fahrzeugsensorik, Kommunikationsmodul, Einrichtung zur Berechnung von Hindernissen, Einrichtung zur Fahrtroutenbestimmung, Einrichtung zur Zielführung, Eingabeeinheit und Ausgabeeinheit.

Nachteilig bei den bekannten Navigationssystemen sowie bei bekannten Verfahren zum Betrieb von Navigationssystemen ist, dass der Fahrer, sofern er sich vom Navigationssystem leiten lässt, ausschließlich die Route befahren muss, die vom Navigationssystem errechnet und ihm als Zielführungsanweisung ausgegeben wird. Wählt der Fahrer nach eigenem Ermessen eine andere Route zum Befahren, die von der vom Navigationssystem vorgegebenen Route abweicht, so kann er die Informationen des Navigationssystems nicht sinnvoll nutzen, da die bekannten Navigationssysteme hierfür nicht konzipiert sind. Es ist deshalb nicht möglich, dass der Fahrer für eine ihm bekannte Strecke eine Route wählen kann, die er nach persönlichen Kriterien hinsichtlich Zeitdauer, Verkehrslast, Effizienz oder Vorlieben ausgesucht hat, und beim Befahren dieser Route hierfür das Navigationssystem zu nutzen.

Beispielsweise möchte der Fahrer für seinen Weg von seiner Wohnung zu seiner Arbeitsstelle und zurück eine andere Route als die vom Navigationssystem berechnete Route befahren. Auch hierfür könnten ihm bestimmte Informationen des Navigationssystems nützüch sein. Wenn auch Zielführungsanweisungen für diese Route nicht notwendig sind, da der Fahrer diese bestens kennt, so ist er doch daran interessiert, rechtzeitig Informationen über die Verkehrssituation zu erhalten, um gegebenenfalls eine andere Route zu befahren, wenn beispielsweise auf dem noch vor ihm liegenden Streckenabschnitt der ursprünglich geplanten Route eine Verkehrsstörung zu verzeichnen ist. Die Ausgabe von Informationen über die Verkehrssituation durch das Navigationssystem beim Befahren einer vom Fahrer selbst gewählten Route, die im Navigationssystem nicht vorgesehen ist, ist jedoch mit derzeitigen Verfahren zum Betrieb von Navigationssystemen und Navigationssystemen für Fahrzeuge nicht möglich.

Die EP-A-0803705 beschreibt ein Verfahren zum Betrieb eines Navigationssystems für ein Fahrzeug, bei dem von einem Ortungssystem Daten zur geographischen Positionen des Fahrzeugs ermittelt und an eine Einrichtung zur elektronischen Datenverarbeitung übermittelt werden, wobei auch vom Fahrer selbst gewählte Routen eingegeben und in einem Routenspeicher abgespeichert werden können.

### Darstellung der Erfindung, Aufgabe, Lösung, Vorteile

Es ist Aufgabe der vorliegenden Erfindung, ein Verfahren zum Betrieb eines Navigationssystems für ein Fahrzeug sowie ein Navigationssystem der gattungsgemäßen Art zu schaffen, bei denen Informationen des Navigationssystems auch für das Befahren von Routen nutzbar sind, die vom Fahrer vor Beginn der Fahrt selbst gewählt wurden und zu denen vom Navigationssystem keine Zielführungsanweisungen ausgegeben werden.

Diese Aufgabe wird erfindungsgemäß durch ein Verfahren der oben genannten Art mit den im Anspruch 1 genannten Merkmalen gelöst.

Dadurch, dass vom Fahrer in das Navigationssystem selbst gewählte Routen eingegeben und von einem Routenspeicher des Navigationssystems abgespeichert werden, ist es vorteilhaft möglich, eine Route zu befahren, die der Fahrer selbst ausgewählt hat und dabei Informationen des Navigationssystems zu nutzen. Die vom Fahrer selbst gewählte Route wird vorteilhafterweise von einem Routenspeicher des Navigationssystems gespeichert. Die Erfindung ermöglicht es, dass der Fahrer für eine ihm bekannte Strecke eine Route wählen kann, die nach persönlichen Kriterien hinsichtlich Zeitdauer, Verkehrslast, Effizienz oder Vorlieben ausgesucht wurde. Trotzdem wird das Modul zur Erkennung und gegebenenfalls zum Umfahren von Verkehrsstörungen in vorteilhafterweise genutzt. Der Fahrer erhält vom Navigationssystem aktuelle Verkehrshinweise, die für die von ihm ausgewählte Route gültig sind, ohne die herkömmliche Routenführung in Anspruch nehmen zu müssen. Ein weiterer Vorteil besteht darin, dass der Fahrer während der Fahrt nicht durch Zielführungshinweise, die eine andere Route betreffen, abgelenkt wird. Der Fahrer kann sich dadurch voll und ganz auf den Straßenverkehr konzentrieren. Die Erfindung trägt damit in vorteilhafter Weise zur Sicherheit im Straßenverkehr bei.

In bevorzugter Ausgestaltung der Erfindung ist vorgesehen, dass beim Abfahren von Strecken die vom Fahrer selbst gewählten Routen vom Routenspeicher des Navigationssystems aufgezeichnet und abgespeichert werden. Dadurch kann auf einfache und vorteilhafte Weise die vom Fahrer selbst gewählte Route exakt definiert und abgespeichert werden.

In weiterer bevorzugter Ausgestaltung der Erfindung ist vorgesehen, dass der Überwachungsmodus des Navigationssystems für die gespeicherte Route wahlweise aktiviert werden kann.

In weiterer bevorzugter Ausgestaltung der Erfindung ist vorgesehen, dass vom Navigationssystem selbsttätig erkannt wird, ob der Fahrer sich auf einer der gespeicherten Routen, die von ihm selbst gewählt wurden, befindet.

Ferner ist in bevorzugter Ausgestaltung der Erfindung vorgesehen, dass der Fahrer bei der Aktivierung des Überwachungsmodus dem Navigationssystem angibt, dass er sich auf einer der gespeicherten Routen befindet, die von ihm selbst gewählt wurden.

Nach weiterer bevorzugter Ausgestaltung der Erfindung ist vorgesehen, dass nach dem Aktivieren des Überwachungsmodus des Navigationssystems beim Befahren einer im Routenspeicher gespeicherten Route, die vom Fahrer selbst gewählt wurde, vom Navigationssystem keine Fahrhinweise ausgegeben werden.

Darüber hinaus ist in bevorzugter Ausgestaltung der Erfindung vorgesehen, dass nach dem Aktivieren des Überwachungsmodus des Navigationssystems beim Befahren einer im Routenspeicher gespeicherten Route, die vom Fahrer selbst gewählt wurde, das Überwachungsmodul zum Empfang von Verkehrsmeldungen aktiv ist und die vor dem Fahrzeug liegenden Routenabschnitte anhand eingehender Meldungen auf Verkehrsstörungen überwacht werden.

Schließlich ist in weiterer bevorzugter Ausgestaltung der Erfindung vorgesehen, dass, sobald auf der Route eine Verkehrsstörung gemeldet wurde, der Fahrer darüber informiert wird.

Die erfindungsgemäße Aufgabe wird ferner durch ein Navigationssystem der oben genannten Art mit den im Anspruch 14 gekennzeichneten Merkmalen gelöst. Dadurch, dass ein in das Navigationssystem integrierter Routenspeicher, in dem die vom Fahrer selbst gewählten Routen speicherbar sind, vorgesehen ist, wird ein Navigationssystem geschaffen, das einen einfachen Aufbau besitzt und flexibel für unterschiedliche Routen anwendbar ist. Das Navigationssystem ist dadurch vorteilhafterweise auch für das Befahren von Routen nutzbar, die vom Fahrer vor Beginn der Fahrt selbst gewählt wurden.

Weitere bevorzugte Ausgestaltungen der Erfindung ergeben sich aus den in den Unteransprüchen genannten Merkmalen.

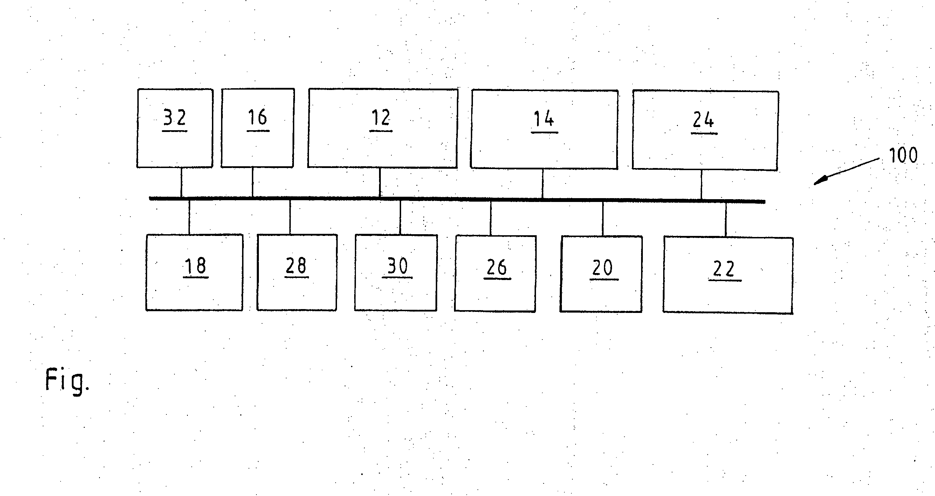

### Kurze Beschreibung der Zeichnung

Nachstehend wird die Erfindung in einem Ausführungsbeispiel anhand der beigefügten Zeichnung näher erläutert. Die Figur zeigt ein Blockschaltbild des erfindungsgemäßen Navigationssystems:

### Bester Weg zur Ausführung der Erfindung

Die Figur zeigt schematisch ein insgesamt mit 100 bezeichnetes Navigationssystem für ein Kraftfahrzeug. Das Navigationssystem 100 umfasst eine Einrichtung 12 zur elektronischen Datenverarbeitung, die im Einzelnen nicht dargestellte Mikroprozessoren, Speicherelemente oder dergleichen aufweisen kann. Ferner umfasst das Navigationssystem 100 ein Ortungssystem 14, beispielsweise ein an sich bekanntes Global Positioning System (GPS). Der Einrichtung 12 ist optional ein Massenspeicher, beispielsweise eine CD-ROM, und eine Empfangseinrichtung zugeordnet.

Des Weiteren umfasst das erfindungsgemäße Navigationssystem 100 eine digitale Straßenkarte 16, eine Fahrzeugsensorik 18, ein Kommunikationsmodul 20 zum Empfang von aktuellen Verkehrsinformationen und jeweils Einrichtungen zur Berechnung von Hindernissen 22, zur Fahrtroutenberechnung 24 sowie zur Ziefführung 26. Das Navigationssystem 100 umfasst ferner eine Eingabeeinheit 28 zum Bedienen des Navigationssystems 100 sowie eine visuelle Ausgabeeinheit 30, beispielsweise ein Display oder dergleichen, und/oder eine akustische Ausgabeeinheit 30, beispielsweise einen Lautsprecher oder dergleichen. Entscheidend für die Erfindung ist, dass in das Navigationssystem 100 zusätzlich ein Routenspeicher 32 integriert ist, in dem die vom Fahrer selbst gewählten Routen speicherbar sind.

Das erfindungsgemäße Navigationssystem 100 kann über die bekannte Routenführung hinaus eine Routenaufzeichnung einer vom Fahrer frei gewählten Strecke durchführen. Vorteilhafterweise wird hierzu eine durch das Fahrzeug abgefahrene Strecke vom Routenspeicher 32 des Navigationssystems 100 aufgezeichnet und abgespeichert. Der Überwachungsmodus kann dann zu einem späteren Zeitpunkt vom Fahrer für diese gespeicherte Route wahlweise aktiviert werden.

In weiterer bevorzugter Ausgestaltung der Erfindung ist vorgesehen, dass vom Navigationssystem 100 selbsttätig erkennbar ist, ob das Fahrzeug sich auf einer der gespeicherten Routen befindet, die vom Fahrer selbst gewählt wurden.

Das anhand der Figur schematisch dargestellte Navigationssystem 100 wird gemäß dem nachfolgend erläuterten erfindungsgemäßen Verfahren betrieben.

Das erfindungsgemäße Verfahren soll anhand von zwei Ausführungsbeispielen erläutert werden.

Beim ersten Ausführungsbeispiel sei angenommen, dass ein Fahrer sich auf dem täglichen Weg von seiner Wohnung zu seiner Arbeitsstelle befindet. Das Fahrzeug, mit dem der Fahrer sich auf dem Weg zur Arbeitsstelle befindet, ist mit dem erfindungsgemäßen Navigationssystem 100 ausgestattet. Aufgrund von Erfahrungswerten, die er aus den jeweils zu dieser Zeit zu verzeichnenden Verkehrverhältnissen gewonnen hat, fährt er jeden Tag dieselbe Route. Aufgrund seiner Ortskenntnis verzichtet der Fahrer auf eine Routenführung durch das Navigationssystem 100. Da das Navigationssystem 100 neben der an sich bekannten dynamischen Routenführung erfindungsgemäß mit dem Routenspeicher 32 ausgerüstet ist, kann der Fahrer vorteilhafterweise die von ihm gewählte Route mit dem Navigationssystem 100 aufzeichnen. Hierzu ist es nur notwendig, den Weg zur Arbeit einmal aufzuzeichnen, wobei die gefahrene Route vom Routenspeicher 32 des Navigationssystems 100 abgespeichert wird. Der Fahrer kann nun, wenn er sich auf den Weg zur Arbeitsstelle begibt, bei Fahrtbeginn den Überwachungsmodus einschalten. Das Navigationssystem 100 empfängt danach alle Verkehrsinformationen und filtert vorteilhafterweise diejenigen heraus, die für den Streckenabschnitt der gespeicherten Route, der noch vor dem Fahrzeug liegt, relevant sind.

Einen Teil des Weges zur Arbeitsstelle fährt der Fahrer auf der Autobahn. Auf den Landstraßen, die neben der Autobahn entlang führen, kennt der Fahrer sich nicht aus. Sobald auf einem Autobahnabschnitt der noch zu fahrenden Strecke sich ein Stau gebildet hat, empfängt das Navigationssystem 100 über das Kommunikationsmodul 20 eine entsprechende Staumeldung. Das Navigationssystem 100 gibt daraufhin eine Warnung aus und schlägt eine Alternativroute vor, welche die Autobahn an der nächsten Ausfahrt verlässt und weiter über die Landstraße führt. Der Fahrer kann sich nun entscheiden, dem Vorschlag zu folgen. Hat er diese Entscheidung getroffen, wird er nachfolgend vom Navigationssystem 100 auf der Alternativroute sicher zum Ziel geführt.

Beim zweiten Ausführungsbeispiel sei angenommen, dass der Fahrer sich auf dem Rückweg von der Arbeitsstelle zu seiner Wohnung befindet. Der Fahrer hat zu Beginn der Fahrt den Überwachungsmodus des Navigationssystems 100 aktiviert. Während der Fahrt ändert der Fahrer seine Pläne und wählt ein anderes Ziel. Das Navigationssystem 100 erkennt das Verlassen der Route und fragt, ob der Fahrer eine Zielführung zu seinem ursprünglichen Ziel wünscht. Der Fahrer verneint dies. Daraufhin ermittelt das Navigationssystem 100 aufgrund der bisher gefahrenen Strecken einen wahrscheinlichen Zielsektor, das heißt von der aktuellen Position des Fahrzeuges ausgehend einen möglichst engen Bereich, in dem das angenommene Ziel liegt. Für diesen Sektor werden dann die Verkehrsinformationen vom Navigationssystem 100 ausgewertet und bei Bedarf dem Fahrer präsentiert.

## Patentansprüche

1. Verfahren zum Betrieb eines Navigationssystems (100) für ein Fahrzeug, insbesondere Kraftfahrzeug, bei dem von einem Ortungssystem (14) Daten zur geographischen Position des Fahrzeugs ermittelt und an eine Einrichtung zur elektronischen Datenverarbeitung (12) mit Zugriff auf eine Datenbank und eine digitale Straßenkarte (16) übertragen werden und anhand dieser Daten der Standort des Fahrzeugs auf der digitalen Straßenkarte (16) bestimmt wird und dem Fahrer des Fahrzeugs akustisch und/oder visuell Zielführungsanweisungen ausgegeben werden, wobei vom Fahrer selbst gewählte Routen in das Navigationssystem (100) eingegeben und von einem Routenspeicher (32) des Navigationssystems (100) abgespeichert werden, **dadurch gekennzeichnet, dass** die vom Fahrer selbst gewählte Route an einem PC festgelegt und über ein Download in das Navigationssystem (100) eingegeben und vom Routenspeicher 32 abgespeichert wird.

2. Verfahren nach Anspruch 1,
**dadurch gekennzeichnet, dass**
beim Abfahren von Strecken die vom Fahrer selbst gewählten Routen vom Routenspeicher (32) des Navigationssystems (100) aufgezeichnet und abgespeichert werden.

3. Verfahren nach den Ansprüchen 1 oder 2,
**dadurch gekennzeichnet, dass**
der Überwachungsmodus des Navigationssystems (100) für die gespeicherte Route wahlweise aktiviert werden kann.

4. Verfahren nach einem der vorhergehenden Ansprüche,
**dadurch gekennzeichnet, dass**
das Navigationssystem (100) selbsttätig erkennt, ob das Fahrzeug sich auf einer der gespeicherten Routen befindet, die vom Fahrer selbst gewählt wurden.

5. Verfahren nach Anspruch 3,
**dadurch gekennzeichnet, dass**
der Fahrer bei der Aktivierung des Überwachungsmodus dem Navigationssystem (100) angibt, dass er sich auf einer der gespeicherten Routen befindet, die von ihm selbst gewählt wurde.

6. Verfahren nach einem der vorhergehenden Ansprüche,
**dadurch gekennzeichnet, dass**
nach dem Aktivieren des Überwachungsmodus des Navigationssystems (100) beim Befahren einer im Routenspeicher gespeicherten Route, die vom Fahrer selbst gewählt wurde, vom Navigationssystem (100) keine Fahrhinweise ausgegeben werden.

7. Verfahren nach einem der vorhergehenden Ansprüche,
**dadurch gekennzeichnet, dass**
nach dem Aktivieren des Überwachungsmodus des Navigationssystems (100) beim Befahren einer im Routenspeicher gespeicherten Route, die vom Fahrer selbst gewählt wurde, das Überwachungsmodul zum Empfang von Verkehrsmeldungen aktiv ist und die vor dem Fahrzeug liegenden Routenabschnitte anhand eingehender Meldungen auf Verkehrsstörungen überwacht werden.

8. Verfahren nach Anspruch 7,
**dadurch gekennzeichnet, dass**
sobald auf der Route eine Verkehrsstörung gemeldet wurde der Fahrer darüber informiert wird.

9. Verfahren nach den Ansprüchen 7 und 8,
**dadurch gekennzeichnet, dass**
das Navigationssystem (100) auf Wunsch des Fahrers oder selbsttätig eine Alternativroute berechnet und den Fahrer über diese Route führt.

10. Verfahren nach einem der vorhergehenden Ansprüche,
**dadurch gekennzeichnet, dass**
das Navigationssystem (100) ständig die aktuelle Position des Fahrzeuges ermittelt und diese mit der eingespeicherten Route vergleicht.

11. Verfahren nach Anspruch 10,
**dadurch gekennzeichnet, dass**
sobald das Fahrzeug die vordefinierte Route verlässt vom Navigationssystem (100) automatisch eine neue Route zum Ziel berechnet und eine Routenführung vorgenommen wird oder der Fahrer aufgefordert wird, ein neues Ziel zu definieren.

12. Verfahren nach Anspruch 10,
**dadurch gekennzeichnet, dass**
sobald das Fahrzeug die vordefinierte Route verlässt vom Navigationssystem (100) automatisch ein Sektor berechnet wird, für den dann die Verkehrsmeldungen überwacht und entsprechende Informationen an den Fahrer gegeben werden.

13. Navigationssystem (100) für ein Fahrzeug, insbesondere ein Kraftfahrzeug, im Wesentlichen bestehend aus einer Einrichtung zur elektronischen Datenverarbeitung (12), die Zugriff auf eine Datenbank mit einer digitalen Straßenkarte (16) hat, einem Ortungssystem (14), einer Fahrzeugsensorik (18) zum Erkennen von Fahrzeugbewegungen, einem Kommunikationsmodul (20) zum Empfang von aktuellen Verkehrsinformationen, einer Eingabeeinheit (22) zum Bedienen des Navigationssystems (100) und wenigstens einer Ausgabeeinheit (30) für eine akustische und/oder visuelle Zielführungsanweisung, mit einem in das Navigationssystem (100) integrierten Routenspeicher (32), in dem vom Fahrer selbst gewählte Routen speicherbar sind, **dadurch gekennzeichnet, dass** das Navigationssystem derart ausgestaltet ist, dass die vom Fahrer selbst gewählte Route an einem PC festgelegt und über ein Download über das Navigationssystem (100) eingegeben und vom Routenspeicher (32) abgespeichert wird.

14. Navigationssystem nach Anspruch 13, **dadurch gekennzeichnet, dass**
der Routenspeicher (32) so ausgeführt ist, dass von ihm beim Abfahren von Strecken die vom Fahrer selbst gewählten Routen aufzeichenbar und abspeicherbar sind.

15. Navigationssystem nach Anspruch 13,
**dadurch gekennzeichnet, dass**
der Überwachungsmodus des Navigationssystems (100) für die gespeicherte Route wahlweise aktivierbar ist.

## Claims

1. Method for operating a navigation system (100) for a vehicle, particularly a motor vehicle, in which a position-finding system (14) ascertains data relating to geographical positions of the vehicle and transmits them to a device for electronic data processing (12) with access to a database and to a digital road map (16), and these data are used to determine the position of the vehicle on the digital road map (16) and to output routing instructions to the driver of the vehicle audibly and/or visually, wherein routes chosen by the driver himself are input into the navigation system (100) and stored by a route memory (32) of the navigation system (100), **characterized in that** the route chosen by the driver himself is stipulated on a PC and input into the navigation system (100) by means of a download and stored by the route memory (32).

2. Method according to Claim 1,
**characterized in that**
when following routes, the routes selected by the driver himself are recorded and stored by the route memory (32) of the navigation system (100).

3. Method according to Claims 1 and 2, **characterized in that** the monitoring mode of the navigation system (100) can be selectively activated for the stored route.

4. Method according to one of the preceding claims, **characterized in that**
the navigation system (100) automatically recognizes whether the vehicle is on one of the stored routes which have been chosen by the driver himself.

5. Method according to Claim 3,
**characterized in that**
when activating the monitoring mode, the driver indicates to the navigation system (100) that he is on one of the stored routes which he himself has chosen.

6. Method according to one of the preceding claims **characterized in that**
when the monitoring mode of the navigation system (100) has been activated, the navigation system (100) does not output any driving advice when travelling on a route stored in the route memory which has been chosen by the driver himself.

7. Method according to one of the preceding claims, **characterized in that**
when the monitoring mode of the navigation system (100) has been activated, the monitoring module is active for receiving traffic reports, and the road sections ahead of the vehicle are monitored for traffic disruptions using incoming reports, when travelling on a route stored in the route memory which has been chosen by the driver himself.

8. Method according to Claim 7,
**characterized in that**
as soon as a traffic disruption has been reported on the route, the driver is informed thereof.

9. Method according to Claims 7 and 8,
**characterized in that**
the navigation system (100) calculates an alternative route at the request of the driver or automatically and takes the driver via this route.

10. Method according to one of the preceding claims, **characterized in that**
the navigation system (100) constantly ascertains the current position of the vehicle and compares it with the stored route.

11. Method according to Claim 9,
**characterized in that**
as soon as the vehicle leaves the predefined route, the navigation system (100) automatically calculates a new route to the destination and performs routing, or the driver is asked to define a new destination.

12. Method according to Claim 10,
**characterized in that**
as soon as the vehicle leaves the predefined route, the navigation system (100) automatically calculates a sector for which the traffic reports are then monitored and appropriate information is presented to the driver.

13. Navigation system (100) for a vehicle, particularly a motor vehicle, essentially comprising a device for electronic data processing (12) which has access to a database with a digital road map (16), a position-finding system (14), a vehicle sensor system (18) for recognizing vehicle movements, a communication module (20) for receiving up-to-date- traffic information, an input unit (22) for the operator control of the navigation system (100) and at least one output unit (30) for providing audible and/or visual routing instructions, with a route memory (32) which is integrated into a navigation system (100) and can be used to store routes chosen by the driver himself, **characterized in that** the navigation system is designed so that the route chosen by the driver himself is stipulated on a PC and input into the navigation system (100) by means of a download and stored by the route memory (32).

14. Navigation system according to Claim 13, **characterized in that**
the route memory (32) is in a form such that when following routes it can record and store the routes chosen by the driver himself.

15. Navigation system according to Claim 13, **characterized in that** the monitoring mode of the navigation system (100) can be selectively activated for the stored route.

## Revendications

1. Procédé de fonctionnement d'un système de navigation (100) pour un véhicule, notamment un véhicule automobile, avec lequel des données relatives à la position géographique du véhicule sont déterminées par un système de localisation (14) et sont transmises à un dispositif de traitement électronique de données (12) ayant accès à une base de données et à une carte routière numérique (16) et l'emplacement du véhicule sur la carte routière numérique (16) est déterminé au moyen de ces données et des instructions de guidage vers la destination sont communiquées au conducteur du véhicule de manière sonore et/ou visuelle, des itinéraires choisis par le conducteur lui-même étant saisis dans le système de navigation (100) et mémorisés par une mémoire d'itinéraire (32) du système de navigation (100), **caractérisé en ce que** l'itinéraire choisi par le conducteur lui-même est défini sur un PC et saisi dans le système de navigation (100) par un téléchargement, puis mémorisé dans la mémoire d'itinéraire (32).

2. Procédé selon la revendication 1, **caractérisé en ce que** les itinéraires choisis par le conducteur lui-même sont enregistrés et mémorisés par la mémoire d'itinéraire (32) du système de navigation' (100) en parcourant des trajets.

3. Procédé selon les revendications 1 ou 2, **caractérisé en ce que** le mode de surveillance du système de navigation (100) pour l'itinéraire mémorisé peut être activé à volonté.

4. Procédé selon l'une des revendications précédentes, **caractérisé en ce que** le système de navigation (100) reconnaît automatiquement si le véhicule se trouve sur l'un des itinéraires mémorisés qui ont été choisis par le conducteur lui-même.

5. Procédé selon la revendication 3, **caractérisé en ce que** le conducteur, en activant le mode de surveillance, indique au système de navigation (100) qu'il se trouve sur l'un des itinéraires mémorisés qui ont été choisis par lui-même.

6. Procédé selon l'une des revendications précédentes, **caractérisé en ce qu'**aucune instruction de conduite n'est plus délivrée par le système de navigation (100) après l'activation du mode de surveillance du système de navigation (100) en parcourant un itinéraire mémorisé dans la mémoire d'itinéraire qui a été choisi par le conducteur lui-même.

7. Procédé selon l'une des revendications précédentes, **caractérisé en ce qu'**après l'activation du mode de surveillance du système de navigation (100) en parcourant un itinéraire mémorisé dans la mémoire d'itinéraire qui a été choisi par le conducteur lui-même, le module de surveillance est actif pour recevoir des messages de trafic et les portions d'itinéraire qui se trouvent devant le véhicule sont surveillées au moyen des messages reçus pour y déceler perturbations du trafic.

8. Procédé selon la revendication 7, **caractérisé en ce que** dès qu'une perturbation du trafic est signalée sur l'itinéraire, le conducteur en est informé.

9. Procédé selon les revendications 7 et 8, **caractérisé en ce que** le système de navigation (100),
sur demande du conducteur ou automatiquement, calcule un itinéraire alternatif et guide le conducteur par cet itinéraire alternatif.

10. Procédé selon l'une des revendications précédentes, **caractérisé en ce que** le système de navigation (100) détermine constamment la position actuelle du véhicule et compare celle-ci avec l'itinéraire mémorisé.

11. Procédé selon la revendication 10, **caractérisé en ce que** dès que le véhicule quitte l'itinéraire prédéfini, le système de navigation (100) calcule automatiquement un nouvel itinéraire vers la destination et effectue un guidage suivant l'itinéraire ou alors le conducteur est invité à définir une nouvelle destination.

12. Procédé selon la revendication 10, **caractérisé en ce que** dès que le conducteur quitte l'itinéraire prédéfini, le système de navigation (100) calcule automatiquement un secteur pour lequel les messages de trafic sont ensuite surveillés et les informations correspondantes sont communiquées au conducteur.

13. Système de navigation (100) pour un véhicule, notamment un véhicule automobile, composé pour l'essentiel d'un dispositif de traitement électronique de données (12) ayant accès à une base de données comprenant une carte routière numérique (16), un
système de localisation (14), un dispositif de détection de véhicule (18) pour détecter les mouvements du véhicule, un module de communication (20) pour recevoir des informations de trafic actuelles, une unité de saisie (22) pour commander le système de navigation (100) et au moins une unité de sortie (30) pour une notification sonore et/ou visuelle de guidage vers la destination, avec une mémoire d'itinéraire (32) intégrée dans le système de navigation (100) dans laquelle peuvent être mémorisés des itinéraires choisis par le conducteur lui-même, **caractérisé en ce que** le système de navigation est configuré de telle sorte que l'itinéraire choisi par le conducteur lui-même est défini sur un PC et saisi dans le système de navigation (100) par un téléchargement, puis mémorisé dans la mémoire d'itinéraire (32).

14. Système de navigation selon la revendication 13, **caractérisé en ce que** la mémoire d'itinéraire (32) est réalisée de telle sorte qu'elle peut enregistrer et mémoriser les itinéraires choisis par le conducteur lui-même en parcourant des trajets.

15. Système de navigation selon la revendication 13, **caractérisé en ce que** le mode de surveillance du système de navigation (100) pour l'itinéraire mémorisé peut être activé à volonté.
